(19) **Europäisches Patentamt European Patent Office Office européen des brevets**

(11) **EP 4 700 654 A1**

(12) **EUROPEAN PATENT APPLICATION**

(43) Date of publication:
**25.02.2026 Bulletin 2026/09**

(51) International Patent Classification (IPC):
**G06N 3/047** (2023.01)      **G06N 3/048** (2023.01)
**G06N 3/09** (2023.01)

(21) Application number: **25190354.8**

(22) Date of filing: **18.07.2025**

(52) Cooperative Patent Classification (CPC):
**G06N 3/048; G06N 3/047; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 JP 2024139662**

(71) Applicant: **FUJITSU LIMITED**
**Kawasaki-shi, Kanagawa 211-8588 (JP)**

(72) Inventors:
• **Makinoshima, Fumiyasu**
**Kawasaki-shi, Kanagawa, 211-8588 (JP)**
• **Mitomi, Tatsuya**
**Kawasaki-shi, Kanagawa, 211-8588 (JP)**
• **Makihara, Fumiya**
**Kawasaki-shi, Kanagawa, 211-8588 (JP)**
• **Segawa, Eigo**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **METHOD FOR MACHINE LEARNING AND MACHINE LEARNING PROGRAM**

(57)    A method for machine learning includes training a neural network including parameters, at least some of the parameters having a structure corresponding to an order and a coefficient of an explanatory variable of a utility function of a discrete choice model, using training data including a value of the explanatory variable and a choice result; and specifying the utility function in the neural network after being subjected to the training.

## FIG.3

**Description**

[Technical Field]

The embodiment discussed herein relates to a method for machine learning and a machine learning program.

[Background Art]

A method has been known which simulates human behavior or examines measurement for human behavior by modeling human behavior on the basis of data related to human behavior (choice behavior) such as purchase data on the web, behavior tracking data, and questionnaire data.

A discrete choice model is sometimes used to model human behavior. A discrete choice model is a method for stochastically modeling human behavior on the basis of the magnitude of a utility function $U_i$. A utility function $U_i$ is expressed by the sum of a deterministic term $V_i$ and an error term $\varepsilon_i$. Being assumed to be a linear sum of an explanatory variable $x_i$ of an alternative (option, choice candidate, selection candidate) i and its parameter $\beta$, the deterministic term $V_i$ is expressed by $V_i = \beta \cdot x_i$. Assuming that the error term $\varepsilon_i$ follows a particular probability distribution, the probability $P_i$ that a person chooses the alternative i is expressed in the form of a soft max.

A utility function $U_i$ is determined manually in a trial-and-error manner using expertise. For example, the form of a utility function $U_i$ is designed by the designer giving format such as the type and the number of the explanatory variable $x_i$. In the designing, the designer estimates the value of the parameter $\beta$ from data related to human behavior.

An analysis using a discrete choice model highly values the understandability for a person (analyst) on the logic that outputs the result of prediction by using a discrete choice model, which means that the utility function $U_i$ has high interpretability. When a utility function $U_i$ is designed manually, it can be said that the utility function $U_i$ has high interpretability because the utility function $U_i$ can be expressed analytically by a combination of explanatory variables $x_i$.

A method has also been known which replaces the entire part or a part (e.g., linear utility part) of a utility function $U_i$ with a Neural Network (NN).

[Prior Art Reference]

[Patent Document]

[Patent Document 1] Japanese Laid-Open Patent Publication No. 2023-176898

[Summary of Invention]

[Problems to be Solved by Invention]

If a utility function $U_i$ is designed manually, the utility function $U_i$ may include bias in the explanatory variable $x_i$ or the parameter $\beta$ because the designing involves human (designer's) thoughts.

As one of conceivable solutions to reduction of the possibility that bias is included in a utility function $U_i$, a method that replaces the entire part or a part (e.g., linear utility part) of a utility function $U_i$ with a NN may be adopted. However, this method, which may blackbox the utility function $U_i$ due to the NN, has a possibility that the interpretability is degraded as compared with manual design.

As one aspect, one of the objects of the embodiment is to output a utility function interpretable for humans.

[Means to Solve the Problem]

According to an aspect of the embodiment(a), a computer-implemented method for machine learning includes training a neural network including parameters, at least some of the parameters having a structure corresponding to an order and a coefficient of an explanatory variable of a utility function of a discrete choice model, using training data including a value of the explanatory variable and a choice result; and specifying the utility function in the neural network after being subjected to the training.

[Effect of Invention]

In one aspect, the embodiment discussed herein can output a utility function interpretable for humans.

[Brief Description of Drawings]

FIG. 1 is a diagram illustrating an example of hardware configuration of a computer that embodies a function of a server according to one embodiment;

FIG. 2 is a diagram illustrating an example of functional configuration of the server according to the one embodiment;

FIG. 3 is a diagram illustrating an example of a NN model constructed by a NN constructing unit;

FIG. 4 is a diagram illustrating a NN model of a comparative example;

FIG. 5 is a diagram illustrating another example of the NN model of the one embodiment;

FIG. 6 is a diagram illustrating an example of experimental numeral data obtained in an application example of the one embodiment;

FIG. 7 is a diagram illustrating a NN model of an application example of the one embodiment;

FIG. 8 is a diagram illustrating example of visualized choice probabilities;

FIG. 9 is a flow chart illustrating an example of operation of a specifying process of a utility function in the server of the one embodiment;

FIG. 10 is a flow chart illustrating an example of operation of an adjusting process in the server of the one embodiment; and

FIG. 11 is a flow chart illustrating an example of operation of an inferring process in the server of the one embodiment.

[Description of Embodiment(s)]

Hereinafter, an embodiment will now be described with reference to the accompanying drawings. However, the following embodiment is merely illustrative and is not intended to exclude the application of various modifications and techniques not explicitly described in the embodiment. For example, the present embodiment can be variously modified and implemented without departing from the scope thereof. Further, each of the drawings can include additional functions not illustrated therein to the elements illustrated in the drawing.

Example of Hardware Configuration:

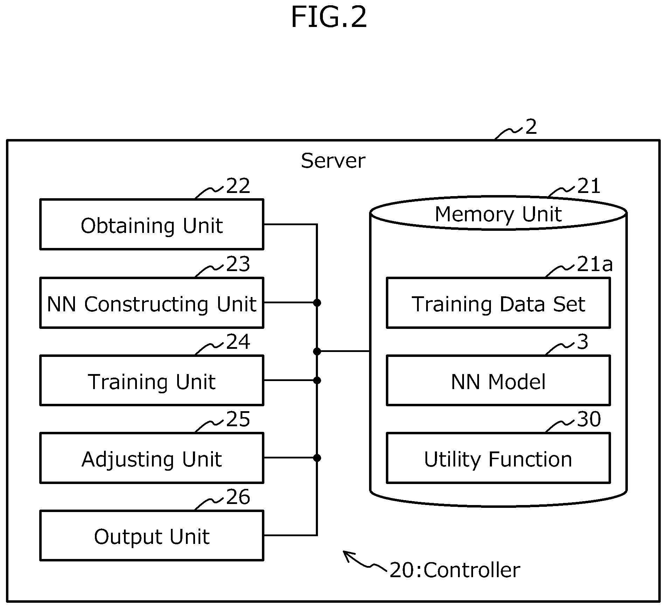

Description will now be made in relation to an example of a hardware (HW) configuration of the server 2 (see FIG. 2) of the one embodiment. The server 2 of the one embodiment may be a virtual server (VM: Virtual Machine) or a physical server. The function of a server 2 of the first embodiment may be embodied by one computer or by two or more computers. Further, at least a part of the functions of the server 2 may be implemented using Hardware (HW) resources and Network (NW) resources provided by cloud environment.

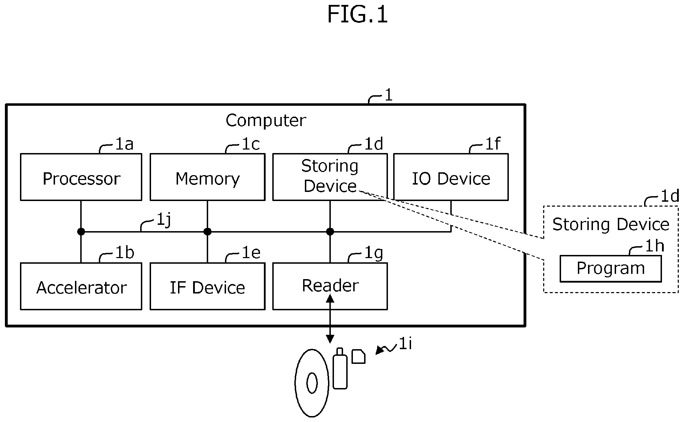

FIG. 1 is a block diagram schematically illustrating an example of a hardware (HW) configuration of the computer 1 that embodies the function of the server 2 of the one embodiment. If multiple computers are used as the HW resources for embodying the functions of the server 2, each of the computers may include the HW configuration illustrated in FIG. 1.

As illustrated in FIG. 1, the computer 1 may illustratively include, as the HW configuration, a processor 1a, an accelerator 1b, a memory 1c, a storing device 1d, an Interface (IF) device 1e, an Input/Output (IO) device 1f, and a reader 1g.

The processor 1a is an example of an arithmetic processing device that performs various types of control and calculations. The processor 1a may be mutually communicably connected to each of the blocks in the computer 1 via a bus 1j. The processor 1a may be a multi-processor including multiple processors or a multi-core processor including multiple processor cores, or may have a structure including two or more multi-core processors.

The processor 1a may be any one of integrated circuits (ICs) such as Central Processing Units (CPUs), Micro Processing Units (MPUs), Accelerated Processing Units (APUs), Digital Signal Processors (DSPs), Application Specific Integrated Circuits (ASICs), and Field Programmable Gate Arrays (FPGAs), or combinations of two or more of these ICs.

The accelerator 1b is an arithmetic processing device that executes Artificial Intelligence (AI) tasks such as a machine learning process and an inferring process using a machine learning model, and may be referred to as an AI accelerator. The accelerator 1b may have a configuration serving as a graphic processing device (graphic accelerator) that controls screen displaying on the IO device 1f (e.g. output device such as a monitor). For example, the accelerator 1b may be mounted on the computer 1, may be connected to the computer 1 via the bus 1j or various interconnects, or have the both configurations. Examples of the accelerator 1b are various ICs such as Graphics Processing Units (GPUs), APUs, DSPs, ASICs, and FPGAs.

The memory 1c stores information such as various data, programs, and the likes. An example of the memory 1c is one of a volatile memory such as a Dynamic Random Access Memory (DRAM) and a non-volatile memory such as a persistent Memory (PM) or the both.

The storing device 1d stores information such as various data, programs, and the likes. Examples of the storing device 1d may be various storing devices including a magnetic disk device such as a Hard Disk Drive (HDD), a semiconductor drive device such as a Solid State Drive (SSD), a nonvolatile memory, and the like. The non-volatile memory may be, for example, a flash memory, a Storage Class Memory (SCM), a Read Only Memory (ROM), and the like.

The storing device 1c may store a program 1h (machine learning program) that implements all or a part of various functions of the computer 1. For example, the processor 1a of the computer 1 may embody the function of a controller 20 (see FIG. 2) to be detailed below of the computer 1 by expanding the program 1h stored in the storing device 1d on the memory 1c and executing the expanded program 1h.

The IF device 1e is an example of a communication IF that controls the connection and communication between the computer 1 and another computer. For example, the IF device 1e may include an applying adapter conforming to Local Area Network (LAN) such as Ethernet® or optical communication such as Fibre Channel (FC). The applying adapter may be compatible with either or both of wireless and wired communication schemes. Furthermore, the program 1h may be downloaded from a network to the computer 1 through the communication IF device 1e and be stored in the storing device 1d.

The IO device 1f may include one or both of an input device and an output device. Examples of the input device include a keyboard, a mouse, and the like. Examples of the output device include a monitor, a projector, a printer, and the like. The IO device 1f may include, for example, a touch panel that integrates an input device and an output device with each other. The output device may be connected to the accelerator 1b.

The reader 1g is an example of a reader that reads information of data and programs recorded on a recording medium 1i. The reader 1g may include a connecting terminal or device to which the recording medium 1i may be connected or inserted. Examples of the reader 1g include an applying adapter conforming to, for example, a Universal Serial Bus (USB), a drive apparatus that accesses a recording disk, and a card reader that accesses a flash memory such as an SD card. The program 1h may be stored in the recording medium 1i. The reader 1g may read the program 1h from the recording medium 1i and store the read program 1h into the storing device 1d.

Examples of the recording medium 1i illustratively include a non-transitory computer-readable recording medium such as a magnetic/optical disk, and a flash memory. Examples of the magnetic/optical disk include a flexible disk, a Compact Disc (CD), a Digital Versatile Disc (DVD), a Blu-ray disk, a Holographic Versatile Disc (HVD), and the like. Examples of the flash memory include a semiconductor memory such as a USB memory and an SD card.

The HW configuration of the computer 1 described above is exemplary. Accordingly, the computer 1 may appropriately undergo increase or decrease of the HW devices (e.g., addition or deletion of arbitrary blocks), division, integration in an arbitrary combination, or addition or deletion of the bus.

Example of Functional Configuration:

FIG. 2 is a block diagram illustrating an example of the functional configuration of the server 2 of an example of the one embodiment. The server 2 is an example of a computer or an information processing apparatus that outputs a utility function interpretable for humans.

As illustrated in FIG. 2, the server 2 may illustratively include a memory unit 21, an obtaining unit 22, a NN constructing unit 23, a training unit 24, an adjusting unit 25, and an output unit 26. The functional blocks 22 to 26 included in the server 2 are an example of a controller 20. The function of the controller 20 may be embodied by, for example, the processor 1a of the computer 1 illustrated in FIG. 1 executing the program 1h expanded on the memory 1c.

The memory unit 21 may illustratively include a storing region capable of storing a training data set 21a, a NN model 3, and a utility function 30. The storing region of the memory unit 21 may be embodied by one or the both of the storing regions of the memory 1c and the storing device 1d of the computer 1 illustrated in FIG. 1.

The training data set 21a may include, for example, data related to human behavior (choice behavior, selection behavior). The NN model 3 is a machine learning model expressing a given utility function, and may be used, for example, as a discrete choice model. The NN model 3 of the one embodiment may have a configuration that can express a utility function in a form interpretable for humans. The utility function 30 expresses the utility function included in the NN model 3 in a form interpretable for humans. These pieces of information that the memory unit 21 stores will be detailed below.

The server 2 (controller 20) may perform, for example, a constructing process (designing) of the NN model 3 based on the training data set 21a, a machine-learning process (training) of the NN model 3 using the training data set 21a, and an outputting process of a utility function 30 included in the trained NN model 3.

The server 2 (controller 20) may execute an inferring process using the trained NN model 3. For this purpose, the memory unit 21 stores inference data and a result of inference. In addition, the server 2 (controller 20) may optionally include the adjusting unit 25 (as an additional element) or may omit the adjusting unit 25.

For example, the obtaining unit 22 may receive the training data set 21a from another computer (not illustrated) via the IF device 1e and a network and store the received training data set 21a in the storing region.

The NN constructing unit 23 executes the constructing process of the NN model 3 based on the training data set 21a. The constructing process of the NN model 3 may include, for example, determination of the width of each layer and each function included in the NN model 3. A width may be, for example, the number of nodes in a layer, the number of inputs and/or outputs in each function.

The training unit 24 executes the machine-learning process of the NN model 3 using the training data set 21a. Examples of the scheme of the machine-learning process include various known methods such as a gradient descent method. For example, the training unit 24 may update the various parameters of the NN model 3 such that a loss function L based on the result output from the NN model 3 in response to input of input data included in the training data set 21a and correct answer data (i.e., ground truth data), which is one example of the choice result (selection result) included in the training data set 21a, is minimized.

The adjusting unit 25 adjusts one or more parameters included in the trained NN model 3. For example, the adjusting unit 25 may perform a re-machine learning process (re-training, fine tuning) of the trained NN model 3 in order to further improve the interpretability of the utility function 30.

The output unit 26 outputs the output data. The output data may include, for example, at least one of the NN model 3, the utility function 30, and inference result (if the controller 20 executes an inferring process). The method of outputting output data is exemplified by at least one of displaying the contents of the output data on a display device such as the IO device 1f, storing the output data into the memory unit 21 or another computer, and transmitting the output data to another computer via the IF device 1e and the network.

Explanation of a NN model:

Next, description will now be made in relation to an example of the NN model 3 of the one embodiment. As described above, the NN model 3 expresses a given utility function. The following description assumes a case where the given utility function is related to the choice of the transportation means. The utility function $U_i$ is represented by the following equation (1).

$$U_i = V_i + \varepsilon_i \qquad (1)$$

In the above equation (1), the symbol i represents a variable indicating any alternative (option, choice candidate, selection candidate). If the number of all the alternatives is N (N is an integer of two or more), the relationship $1 \le i \le N$ is satisfied. If N=3, the alternative i may be, for example, "alternative i=1: car", "alternative i=2: train", "alternative i=3: bus". The term $V_i$ is a deterministic term and indicates the degree (the utility of the alternative i) to which the alternative i is attractive to a certain person. The tern $\varepsilon_i$ is an error term, and indicates variations (deviations) due to factors not included in the deterministic term $V_i$. In the one embodiment, the error term $\varepsilon_i$ is assumed to follow a given probability distribution.

The deterministic term $V_i$ is expressed by the following equation (2).

$$V_i = \beta \cdot x_i \qquad (2)$$

In the above equation (2), the symbol $\beta$ represents a weight. The term $x_i$ is an explanatory variable, which is a factor that determines the utility, such as the factor involved in the movement by transportation means. M (M types of) explanatory variables $x_i$ may exist (where, M is an integer of one or more). When a variable representing any one of the M explanatory variables $x_i$ is represented by m (where $1 \le m \le M$), the explanatory variable $x_i$ may be expressed by an explanatory variable $x_{im}$. If two or more explanatory variables $x_i$ exist ($M \ge 2$), the deterministic term $V_i$ may be represented by the following equation (2A).

$$V_i = \beta_1 \cdot x_{i1} + \ldots + \beta_M \cdot x_{iM} \qquad (2A)$$

In the above equation (2A), the terms $\beta_1$ to $\beta_M$ are weights associated with (corresponding to) the explanatory variables $x_{i1}$ to $x_{iM}$, respectively. For example, when M=3, the explanatory variables $x_{iM}$ may be "explanatory variable $x_{i1}$: time", "explanatory variable $x_{i2}$: cost (fee)", and "explanatory variable $x_{i3}$: distance", for example.

Assuming that the error term $\varepsilon_i$ follows a given probability distribution, a choice probability (selection probability) $P_i$ that a certain person chooses the alternative i in a choice behavior following a utility function $U_i$ is expressed in the form of a soft max as indicated by following equation (3). In the following equation (3), the symbol j represents all the alternatives (options) including the alternative i.

$$P_i = \frac{exp(V_i)}{\sum_j exp(V_j)} \qquad (3)$$

As indicated by the above equation (3), assuming that the error term $\varepsilon_i$ follows a given probability distribution, the choice probability $P_i$ is expressed only by the deterministic term $V_i$ between the deterministic term $V_i$ and the error term $\varepsilon_i$ included in the utility function $U_i$. In other words, the error term $\varepsilon_i$ does not have to be taken into account (can be ignored) in the calculation of the choice probability $P_i$. For the above, in the following description, the deterministic term $V_i$ is treated as equivalent to the utility function $U_i$ (the deterministic term $V_i$ is regarded as the "utility function"), and is expressed as the utility function $V_i$.

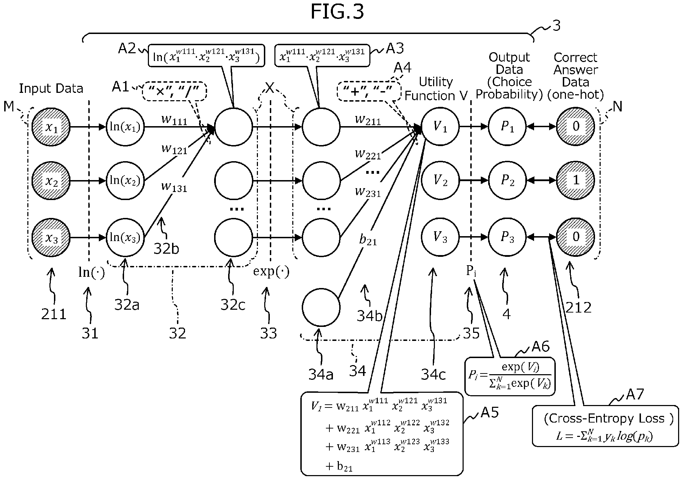

FIG. 3 is a diagram illustrating an example of the NN model 3 constructed by the NN constructing unit 23. FIG. 3 illustrates the NN model 3 constructed by the NN constructing unit 23, input data 211, and the correct answer data (ground truth data) 212.

The input data 211 may include one or more (M) explanatory variables $x_{im}$. The example illustrated in FIG. 3 omits the symbol i in the explanatory variable $x_{im}$ and denotes an explanatory variable by $x_m$.

The correct answer data 212 is data of a correct answer indicating that a certain person selects, when the explanatory variables $x_{i1}$ to $x_{iM}$ are given, which alternative i from among the N alternatives, and is an example of the choice result (result of the selection). The correct answer data 212 may be, for example, one-hot data in which only one of the values 1 to N corresponding to the alternatives i takes a value "1" and all the remaining value take a value "0".

The input data 211 and the correct answer data 212 are an example of training data. The training data set 21a may include multiple pieces of training data. The number M of explanatory variables $x_{im}$ in the input data 211 and the number N of alternatives i in the correct answer data 212 may be fixed values determined for each of the multiple pieces of training data included in the training data set 21a. The example of FIG. 3 assumes M=3 and N=3.

As illustrated in FIG. 3, the NN model 3 may include a logarithmic function unit 31, a first fully-connected layer 32, an exponential function unit 33, a second fully-connected layer 34, and a choice probability function unit 35.

The logarithmic function unit 31 is a functional unit of a logarithmic function (denoted as "ln($\cdot$)" in FIG. 3) that converts an explanatory variable $x_{im}$ into a logarithm and may have the same number of input/output units as the number M of explanatory variables $x_{im}$. For example, the logarithmic function unit 31 converts each of the M input explanatory variables $x_{im}$ into a logarithm log($x_{im}$) and outputs the logarithm log. In the one embodiment, the logarithmic function unit 31 converts the explanatory variable $x_{im}$ to a logarithm ln($x_{im}$), regarding the explanatory variable $x_{im}$ as an antilogarithm of a natural logarithm ln with the base of the Napier's constant (Euler's number) e.

The first fully-connected layer 32 is a layer into which outputs from the logarithmic function unit 31 are input. The first fully-connected layer 32 fully connects M input-side nodes 32a to X output-side nodes 32c (X is an integer of two or more) via edges 32b.

The symbol X indicating the number of nodes 32c is a value related to the expressiveness of the NN model 3 and is a value defining the width of the first fully-connected layer 32 and the second fully-connected layer 34. A larger X can further increase (enhance) the expressiveness of the utility function $V_i$. The value of X may be adjusted (tuned) by the NN constructing unit 23. FIG. 3 illustrates three (X) nodes 32c, but alternatively, the value of X may be larger than the value of M (X is four or more in the example of FIG. 3).

The number of edges 32b may be, for example, equal to or less than a product (M×X) of the number M of nodes 32a and the number X of nodes 32c. Each edge 32b is provided with a weight w that is to be multiplied by the value from the node 32a connected to the edge 32b. The weight w of the edge 32b of the first fully-connected layer 32 is an example of a parameter (first parameter) of the NN model 3 (NN). In each node 32c, the M products each of which is the product of each of the M nodes 32a connected to the node 32c and the weight w of the corresponding edge 32b are added.

In FIG. 3, the weights w assigned to three (M) edges 32b that each connect one of the three (M) nodes 32a to the first node 32c (uppermost in the drawing) are indicated by $w_{111}$, $w_{121}$, $w_{131}$, respectively. Of the subscripts (numbers) of each weight w, the first (left end) subscript indicates the first fully-connected layer 32 (value: 1) or the second fully-connected layer 34 (value: 2). The second (middle) subscript indicates the input-side node 32a (values: 1 to M) of the edge 32b, and the third (right end) subscript indicates the output-side node 32c (values: 1 to X) of the edge 32b. Although not illustrated, to each of the second and subsequent nodes 32c, the M modes 32a are connected via the respective edges 32b.

Here, the value of the input-side node 32a of the first fully-connected layer 32 is a logarithm ln($x_{im}$). Due to the property of the logarithm, the product of the logarithm ln($x_{im}$) and the weight w is the logarithm ln($x_{im}^w$). The addition or subtraction of the logarithms having the same base is the multiplication or division of the antilogarithms (see the reference sign A1 in FIG. 3).

Accordingly, for example, the value of the first output-side node 32c of the first fully-connected layer 32 are ln($x_1^{w111} \cdot x_2^{w121} \cdot x_3^{w131}$), as indicated by the reference sign A2. Thus, in an output-side node 32c of the first fully-connected layer 32, the weights w are each expressed in the form of the order (exponent) of the explanatory variable $x_{im}$ in the antilogarithm part of the logarithm ln. In the following description, for convenience, the value of an arbitrary node 32c of the first fully-connected layer 32 is indicated by ln($x_{i1}^{w1} \cdot \ldots \cdot x_{iM}^{wM}$).

The exponential function unit 33 is a functional unit of an exponential function (indicated by "exp($\cdot$)" in FIG. 3) that converts the output of the first fully-connected layer 32 into an exponent, and may have the same number of input/output units as the number X of the output-side nodes 32c of the first fully-connected layer 32. For example, the exponential function unit 33 converts each of the X values input from the first fully-connected layer 32 into an exponential function and outputs the exponential function. In the one embodiment, the exponential function unit 33 converts the logarithm $\ln(x_{i1}{}^{w1} \cdot \ldots \cdot x_{iM}{}^{wM})$ into $e^{\wedge}\ln(x_{i1}{}^{w1} \cdot \ldots \cdot x_{iM}{}^{wM})$, regarding the logarithm as an exponent of an exponential function with the base of the Napier's constant (Euler's number) e.

Here, if the logarithmic function and the exponential function have the same base (for example, when the common base is e), $e^{\wedge}\ln(x_{i1}{}^{w1} \cdot \ldots \cdot x_{iM}{}^{wM})$ is converted into $x_{i1}{}^{w1} \cdot \ldots \cdot x_{iM}{}^{wM}$, which is the antilogarithm part of the logarithm. That is, the output from the exponential function unit 33 is $x_{i1}{}^{w1} \cdot \ldots \cdot x_{iM}{}^{wM}$, in which the weight w is expressed as the order (exponent) of the explanatory variable $x_{im}$.

The second fully-connected layer 34 is a layer into which outputs from the exponential function unit 33 are input. The second fully-connected layer 34 fully connects X+1 input-side nodes 34a and N output-side nodes 34c via edges 34b. Into X nodes 34a of the X+1 nodes 34a, outputs from the exponential function unit 33 are input. For example, the value of the first input-side node 34a of the second fully-connected layer 34 is $x_1{}^{w111} \cdot x_2{}^{w121} \cdot x_3{}^{w131}$ as indicated by the reference sign A3. In one node 34a among the X+1 nodes 34a, a value for bias b is set. The bias b is a constant term not including an explanatory variable $x_{im}$, and may be, for example, a real number. The value of the node 34a for bias may be, for example, "1".

The number of edges 34b may be, for example, equal to or less than a product $((X+1) \times N)$ of the number X+1 of nodes 34a and the number N of nodes 34c. Each edge 34b is provided with a weight w or a bias b that is to be multiplied by the value from the node 34a connected to the edge 34b. The weights w or the bias b of the edge 34b of the second fully-connected layer 34 are examples of a parameter (second parameter) of the NN model 3 (NN). In each node 34c, the X+1 products each of which is the product of the value of each of the X+1 nodes 34a connected to the node 34c and the weight w or the bias b of the corresponding edge 34b are added (see the reference sign A4).

In FIG. 3, the weights w assigned to the X edges 34b that each connect one of the X nodes 34a to the first node 34c (uppermost in the drawing) are indicated by $w_{211}$, $w_{221}$, $w_{231}$, respectively. Of the subscripts (numbers) of each weight w, the first (left end) subscript indicates the first fully-connected layer 32 (value: 1) or the second fully-connected layer 34 (value: 2). The second (middle) subscript indicates the input-side node 34a (values: 1 to X) of the edge 34b, and the third (right end) subscript indicates the output-side node 34c (values: 1 to N) of the edge 34b. Although not illustrated, to each of the second and subsequent nodes 34c, the X+1 modes 34a are connected via the respective edges 34b.

In addition, the bias b provided to one edge 34b that connects one node 34a for one bias and the first node 34c is indicated by $b_{21}$. Among the subscripts of the bias b, the first (left side) subscript represents the second fully-connected layer 34 (value: 2), and the second (right side) subscript represents the output-side node 34c (value: 1 to N) of the edge 34b.

The N nodes 34c are examples of the utility functions V ($V_1$ to $V_N$). For example, the utility function $V_1$ of the first output-side node 34c of the second fully-connected layer 34 is expressed by the following equation (4) (see the reference A5 in the lower part of the drawing of FIG. 3).

$$V_1 \;=\; w_{211}x_1{}^{w111}x_2{}^{w121}x_3{}^{w131}$$
$$+\; w_{221}x_1{}^{w112}x_2{}^{w122}x_3{}^{w132}$$
$$+\; w_{231}x_1{}^{w113}x_2{}^{w123}x_3{}^{w133}$$
$$+\; b_{21} \qquad\qquad (4)$$

In the above equation (4), the weights $w_{111}$, $w_{121}$, $w_{131}$, $w_{112}$, $w_{122}$, $w_{132}$, $w_{113}$, $w_{123}$, $w_{133}$ of the edges 32b in the first fully-connected layer 32 are expressed as the orders (exponents) of the explanatory variable $x_{im}$ included in the utility function $V_1$. The weights $w_{211}$, $w_{221}$, $w_{231}$ of the edges 34b in the second fully-connected layer 34 are expressed as coefficient of the explanatory variable $x_{im}$ included in the utility function $V_1$. Furthermore, the bias $b_{21}$ of the edge 34b in the second fully-connected layer 34 is expressed as a constant term of the explanatory variable $x_{im}$ included in the utility function $V_1$.

As described above, the second fully-connected layer 34 can express the utility function V in the output-side node 32c in a form (combination) in which a high-order term and an interaction term are combined as in $x_1{}^{w1} \cdot x_2{}^{w2}$. The utility function V can be expressed by the X "components" the same in number of the nodes 32c and the nodes 34a. By increasing the number of components, the expressiveness of the utility function V can be enhanced.

The choice probability function unit 35 is a functional unit of a choice probability function that calculates a choice probability $P_i$ from the outputs of the second fully-connected layer 34, and may have the same number of input/output units as the number N of the output-side nodes 34c of the second fully-connected layer 34. For example, the choice probability function unit 35 calculates the choice probabilities $P_i$ for each of the N values inputted from the second fully-connected layer 34 according to the following equation (5), as indicated by the reference sign A6.

$$P_i = \frac{exp(V_i)}{\sum_{k=1}^{N} exp(V_k)} \qquad (5)$$

The N (three in example of FIG. 3) choice probabilities $P_1$ to $P_N$ output from the choice probability function unit 35 are an example of output data 4.

As described above, the NN constructing unit 23 configures (constructs, creates) the NN model 3 on the basis of the number M of explanatory variables $x_m$ in the input data 211 included in the training data set 21a and the number N of alternatives i of the correct answer data 212 included in the training data set 21a. For example, the NN constructing unit 23 configures the NN model 3 such that at least some of the parameters of the NN model 3 has a configuration corresponding to the order and the coefficient of the explanatory variable $x_i$ included in the utility function $V_i$ of the discrete choice model. In addition, the NN constructing unit 23 may configure the NN model 3 such that the remaining parameter of the NN model 3 has a configuration corresponding to the constant term of the explanatory variable $x_i$, for example. As described above, the NN constructing unit 23 can construct the NN model 3 by fully-connected layer that performs the linear transformation, and can omit, for example, the configuration of the activation function that performs the nonlinear transformation from the inside of the NN model 3.

Therefore, NN model 3 can express the utility function 30 by a simple mathematical equation based on combination of the input explanatory variable x (e.g., time, cost (fee, charge), and distance). As described above, the NN constructing unit 23 can construct the NN model 3 having a network configuration that can express a utility function 30 in the form interpretable for humans (i.e., highly interpretability for humans).

Description of Machine-Learning Process of NN Model

Next, description will now be made in relation to an example of the machine-learning process of the NN model 3.

As illustrated in FIG. 3, the training unit 24 inputs the input data 211 included in the training data set 21a into the NN model 3 constructed by the NN constructing unit 23. The training unit 24 updates the parameters of the NN model 3 such that the loss function L based on the choice probability $P_i$ included in the output data 4 output from the NN model 3 in response to input of the input data 211 and the correct answer data 212 included in the training data set 21a is minimized.

FIG. 3 assumes that the training unit 24 uses a cross-entropy loss as an example of the loss function L (see the reference sign A7). For example, the training unit 24 can estimate the utility function $V_i$ that explains data in the gradient descent method by updating the weights w and the bias b of the NN model 3 such that the loss function L indicated by the following equation (6) is minimized.

$$L = -\sum_{k=1}^{N} y_k \log(p_k) \qquad (6)$$

In the above equation (6), the term $y_k$ is the choice probability ("0" or "1": one hot) of the alternative k ($1 \leq k \leq N$) in the correct answer data 212. The term $P_k$ is a choice probability $P_k$ of the alternative k included in the output data 4.

In the machine-learning process, the training unit 24 may use a loss function L indicated by the equation (6A) instead of the loss function L indicated by the equation (6).

$$L = -\sum_{k=1}^{N} y_k \log(p_k) + \lambda \sum w^2 \qquad (6A)$$

In the above equation (6A), the term $+\lambda \sum w^2$ represents a weight decay (weight decay term) and is an example of the regularization term. Since the regularization term includes a $w^2$, the loss-function L becomes large as the weight w increases. Therefore, training of the NN model 3 using the above equation (6A) including the regularization term can update the parameters of the utility function $V_i$ to values that can reduce the weight w, in other words, a value that can more simplify the equation of the utility function $V_i$.

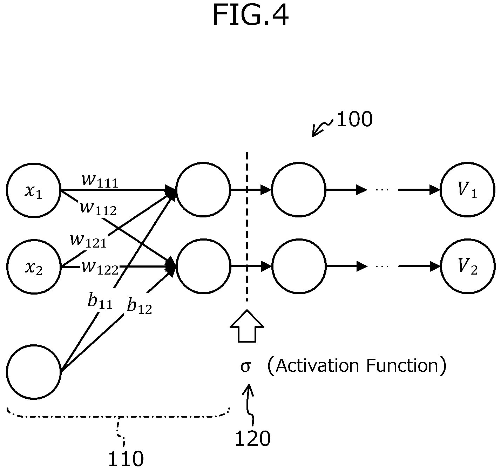

FIG. 4 is a diagram illustrating a NN model 100 according to a comparative example. In the comparative example, the values $x_1$ and $x_2$ are given as explanatory variables that are likely to affect the utility functions $V_1$ and $V_2$ of the alternatives i=1 and 2, respectively.

The NN model 100 illustrated in FIG. 4 repeatedly applies transformation by using a fully-connected layer (linear connecting layer) 110 and an activation function 120 (indicated by the symbol "$\sigma$" in FIG. 4) to explanatory variables $x_1$ and $x_2$ that are to serve as input data. Examples of the activation function 120 include tanh (Hyperbolic tangent function) and Relu (Rectified Linear Unit).

In the machine-learning process of the NN model 100, the weights w and the bias b of the NN model 100 are obtained by training the utility functions $V_1$ and $V_2$ resulting from repeated complex computations such that these utility functions match the training data. However, in the NN model 100, it is difficult for humans to interpret the details and the contents of the utility functions $V_1$ and $V_2$ obtained by the training. One of the reasons for this is that the NN model 100 includes nonlinear transformation by the activation function 120.

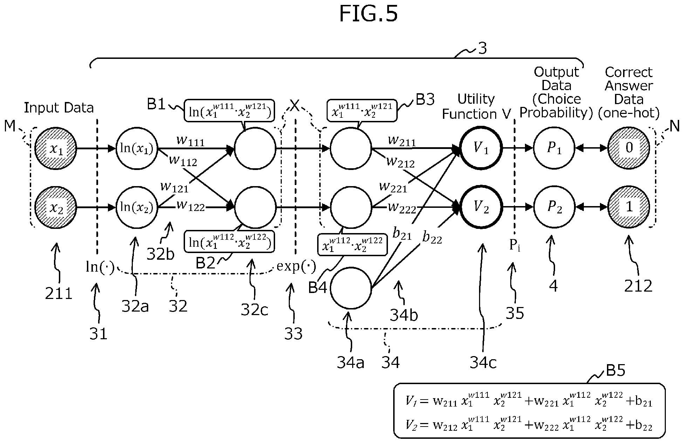

FIG. 5 is a diagram illustrating another example of the NN model 3 according to the one embodiment. FIG. 5 assumes an example where M=2 and N=2 for simplicity.

As illustrated in FIG. 5, in the first fully-connected layer 32, the weight of the edge 32b that connects the first node 32a (uppermost in the drawing) and the first node 32c (uppermost in the drawing) is $w_{111}$, and the weight of the edge 32b that connects the first node 32a (uppermost in the drawing) and the second node 32c (lowermost in the drawing) is $w_{112}$. The weight of the edge 32b that connects the second node 32a (lowermost in the drawing) and the first node 32c is $w_{121}$, and the weight of the edge 32b that connects the second node 32c and the second node 32c is $w_{122}$.

The value of the first node 32a of the first fully-connected layer 32 is $\ln(x_1)$ and the value of the second node 32a is $\ln(x_2)$. Therefore, as indicated by the reference sign B1, the value of the first node 32c of the first fully-connected layer 32 is $\ln(x_1^{w111} \cdot x_2^{w121})$. In addition, as indicated by the reference sign B2, the value of the second node 32c of the first fully-connected layer 32 is $\ln(x_1^{w112} \cdot x_2^{w122})$.

The output of the node 32c of the first fully-connected layer 32 is input into the exponential function unit 33 and converted to an exponent in the exponential function unit 33. Accordingly, as indicated by the reference sign B3, the value of the first node 34a of the second fully-connected layer 34 is $x_1^{w111} \cdot x_2^{w121}$. Further, as indicated by the reference sign B4, the value of the second node 34a of the second fully-connected layer 34 is $x_1^{w112} \cdot x_2^{w122}$.

As illustrated in FIG. 5, in the second fully-connected layer 34, the weight of the edge 34b that connects the first node 34a (uppermost in the drawing) and the first node 34c (uppermost in the drawing) is $w_{211}$. The weight of the edge 34b that connects the first node 34a and the second node 34c (middle in the drawing) is $w_{212}$. The weight of the edge 34b that connects the second node 34a (middle in the drawing) and the first node 34c is $w_{221}$, and the weight of the edge 34b that connects the second node 34a and the second node 34c is $w_{222}$. The bias of the edge 34b that connects the third node 34a (lowermost in the drawing) and the first node 34c is $b_{21}$, and the bias of the edge 34b that connects the third node 34a (lowermost in the drawing) and the second node 34c is $b_{22}$.

The values of the nodes 34c of the second fully-connected layer 34 are expressed by a utility function $V_1$ indicated by the following formula (7) and a utility function $V_2$ indicated by the following formula (8) (see the reference sign B5).

$$V_1 = w_{211}x_1^{w111}x_2^{w121} + w_{221}x_1^{w112}x_2^{w122} + b_{21} \qquad (7)$$

$$V_2 = w_{212}x_1^{w111}x_2^{w121} + w_{222}x_1^{w112}x_2^{w122} + b_{22} \qquad (8)$$

The output unit 26 may specify the utility function 30 and output the specified utility function 30 as output data. The utility function 30 may be in a format interpretable for humans and is exemplified by a mathematical expression representing each of utility functions $V_1$ to $V_N$, a data (graph) obtained by visualizing (for example, graphing) a value-range represented by the mathematical expression, and any combination thereof.

For example, the output unit 26 may specify the utility function 30 in (the form of the above mathematical) equations (7) and (8) on the basis of the weights w and the biases b extracted from the NN model 3, and the configuration of the NN model 3 obtained from the number M of explanatory variables x, the number N of alternatives i and the number X of intermediate nodes. An intermediate node is the node 32c of the first fully-connected layer 32 or the node 34a of the second fully-connected layer 34.

Alternatively, the output unit 26 may specify the weights w and the biases b extracted from the NN model 3 and the configuration of the NN model 3 as the utility function 30. In this instance, a computer that obtains the output data may generate, based on the weights w, the biases b and the configuration of NN model 3, the utility function 30 in the form easily interpretable for humans such as a mathematical equation or a graph of the utility function 30. Also in this case, the utility function 30, which is expressed by the weights w, the biases b and the configuration of NN model 3, can be transformed into at least a mathematical equation and therefore can be said information interpretable for humans.

Here, a case is assumed in which, for example, the training data set 21a is a result of selection made by a discrete choice model having a utility function $V_1$ represented by the following equation (9) and a utility function $V_2$ represented by the following equation (10).

$$V_1 = 1.0x_1 + 2.0x_2 \qquad (9)$$

$$V_2 = 2.0x_1 + 1.0x_2 + 0.5 \qquad (10)$$

For example, the following weights w and biases b of the NN model 3 are assumed to be obtained as a result of the machine-learning process performed by the training unit 24.

$w_{211}$ = 1.0, $w_{221}$ = 2.0, $w_{212}$ = 2.0, $w_{222}$ = 1.0,
$w_{111}$ = 1.0, $w_{121}$ = 0.0, $w_{112}$ = 0.0, $w_{122}$ = 1.0,
$b_{21}$ = 0.0, $b_{22}$ = 0.5

Substituting these parameters into the above equations (7) and (8) obtains the utility functions $V_1$ and $V_2$ in the form of the following equations (11) and (12), respectively, which match the above equations (9) and (10) representing the utility functions $V_1$ and $V_2$ from which the training data set 21a is generated.

$$V_1 = 1.0x_1^{1.0}x_2^{0.0} + 2.0x_1^{0.0}x_2^{1.0} + 0.0$$

$$= 1.0x_1 + 2.0x_2 \qquad (11)$$

$$V_2 = 2.0x_1^{1.0}x_2^{0.0} + 1.0x_1^{0.0}x_2^{1.0} + 0.5$$

$$= 2.0x_1 + 1.0x_2 + 0.5 \qquad (12)$$

As another example, a case is assumed in which, for example, the training data set 21a is a result of selection made by a discrete choice model having a utility function $V_1$ represented by the following equation (13) and a utility function $V_2$ represented by the following equation (14).

$$V_1 = 1.0x_1^2 \qquad (13)$$

$$V_2 = 1.0x_2^2 + 1.0 \qquad (14)$$

For example, the following weights w and biases b of the NN model 3 are assumed to be obtained as a result of the machine-learning process performed by the training unit 24.

$w_{211}$ = 1.0, $w_{221}$ = 0.0, $w_{212}$ = 0.0, $w_{222}$ = 1.0,
$w_{111}$ = 2.0, $w_{121}$ = 0.0, $w_{112}$ = 0.0, $w_{122}$ = 2.0,
$b_{21}$ = 0.0, $b_{22}$ = 1.0

Substituting these parameters into the above equations (7) and (8) obtains the utility functions $V_1$ and $V_2$ in the form of the following equations (15) and (16), respectively, which match the above equations (13) and (14) representing the utility functions $V_1$ and $V_2$ from which the training data set 21a can be generated.

$$V_1 = 1.0x_1^{2.0}x_2^{0.0} + 0.0x_1^{0.0}x_2^{2.0} + 0.0$$

$$= 1.0x_1^2 \qquad (15)$$

$$V_2 = 0.0x_1^{2.0}x_2^{0.0} + 1.0x_1^{0.0}x_2^{2.0} + 1.0$$

$$= 1.0x_2^2 + 1.0 \qquad (16)$$

It can be seen that, from the above equation (15), the explanatory variable $x_1$ largely affects the utility function $V_1$, and from the above equation (16), the explanatory variable $x_2$ largely affects the utility function $V_2$.

As described above, the NN model 3 according to the one embodiment has a configuration corresponding to a mathematical equation in which the parameters (e.g., the weights w and the biases b) express the utility function V in an interpretable form. In other words, unlike the NN model 100 illustrated in FIG. 4, the NN model 3 has a configuration that expresses the utility function V obtained as a result of training in an interpretable form for humans and that can express various combinations of variables.

Description of Adjusting Process of Parameters of NN model

Next, description will now be made in relation to an example of an adjusting process on the parameter by the adjusting unit 25.

For example, the following weights w and biases b of the NN model 3 are assumed to be obtained as a result of the machine-learning process performed by the training unit 24.

$w_{211} = 1.65, w_{221} = 2.12, w_{212} = 0.84, w_{222} = 3.32,$
$w_{111} = 1.11, w_{121} = 1.85, w_{112} = 2.01, w_{122} = 0.24,$
$b_{21} = 3.40, b_{22} = 0.25$

Substituting these parameters into the above equations (7) and (8) obtains the utility functions $V_1$ and $V_2$ in the form of the following equations (17) and (18), respectively.

$$V_1 = 1.65x_1^{1.11}x_2^{1.85} + 2.12x_1^{2.01}x_2^{0.24} + 3.40 \qquad (17)$$

$$V_2 = 0.84x_1^{1.11}x_2^{1.85} + 3.32x_1^{2.01}x_2^{0.24} + 0.25 \qquad (18)$$

In the above equations (17) and (18), all the weights w and the biases b of the NN model 3 are expressed in real numbers each having a decimal place value. If the orders of the explanatory variable $x_1$ and the $x_2$ are real numbers, the interpretability of these utility functions V may be degraded as compared with a case where the order is an integer.

As a solution to the above, the adjusting unit 25 may round a first parameter corresponding to the order of the explanatory variable x included in the specified utility function and adjust a second parameter corresponding to the coefficient of the explanatory variable x while the first parameter after being subjected to the rounding is fixed. As a result, the utility function $V_i$ can be formed into a simpler form (functional form) to enhance the interpretability.

The adjusting unit 25 may simplify, by rounding, the weights $w_{111}$, $w_{121}$, $w_{112}$, $w_{122}$ of the edges 32b of the first fully-connected layer 32 in the utility function $V_i$ obtained in training performed by the training unit 24. As an example, the adjusting unit 25 may convert the weights $w_{111}$, $w_{121}$, $w_{112}$, and $w_{122}$ of the edges 32b of the first fully-connected layer 32 into integers by the rounding-off (operation) as follows. Conversion into an integer by rounding-off is an example of the rounding.

$w_{111} = 1.00, w_{121} = 2.00, w_{112} = 2.00, w_{122} = 0.00$

In addition, the adjusting unit 25 may adjust (fine-tune) the weights $w_{211}$, $w_{221}$, $w_{212}$ and $w_{222}$, and the biases $b_{21}$ and $b_{22}$ of the edges 34b of the second fully-connected layer 34 while fixing the values of the weights w of the edges 32b of the first fully-connected layer 32 are simplified (e.g., integer-converted) values. The method of the adjusting is exemplified by re-training of the NN model 3. Various known methods may be applied to the re-training.

The weights w and the biases b of the NN model 3 are adjusted as follows by the above adjustment on the parameters by the adjusting unit 25.

$w_{211} = 1.72, w_{221} = 1.93, w_{212} = 0.87, w_{222} = 3.61,$
$w_{111} = 1.00, w_{121} = 2.00, w_{112} = 2.00, w_{122} = 0.00,$
$b_{21} = 3.23, b_{22} = 0.36$

Substituting these parameters into the above equations (7) and (8) obtains the utility functions $V_1$ and $V_2$ in the form of simplified mathematical equations in which the orders of the explanatory variables $x_1$ and $x_2$ are converted to integers as following equations (19) and (20), respectively. As a result, the utility functions $V_1$ and $V_2$ can enhance the interpretability thereof.

$$V_1 = 1.72x_1^{1.00}x_2^{2.00} + 1.93x_1^{2.00}x_2^{0.00} + 3.23$$

$$= 1.72x_1x_2^2 + 1.93x_1^2 + 3.23 \qquad (19)$$

$$V_2 = 0.87x_1^{1.00}x_2^{2.00} + 3.61x_1^{2.00}x_2^{0.00} + 0.36$$

$$= 0.87x_1x_2^2 + 3.61x_1^2 + 0.36 \qquad (20)$$

Application Example

Next, description will now be made in relation to an application example of the scheme of the one embodiment. This application example assumes that the one embodiment is to be applied to actual environment and describes a result of numerical experiment performed on choice data generated to include an unknown utility function V.

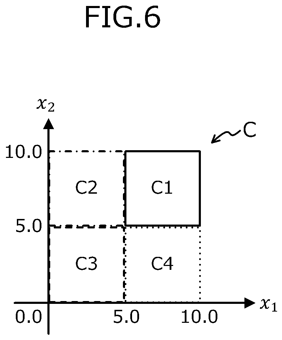

FIG. 6 is a diagram illustrating an example of experimental numeral data obtained in the application example of the one embodiment. FIG. 6 illustrates, as experimental numeral data of the application example, value ranges of the explanatory variables $x_1$ and $x_2$ values and a choice result label C. The choice C1 (frame of solid line), the choice C2 (frame of one-dot dashed line), the choice C3 (frame of dashed line), and the choice C4 (frame of dotted line) represent the four alternatives included in the choice result label C.

The explanatory variables $x_1$ and $x_2$ are one example of the input data 211 and have a value range of 0.0 to 10.0. The choice result label C is one example of the correct answer data 212. The choice result label C indicates the choices (alternatives) C1 to C4 different with the values of the explanatory variables $x_1$ and $x_2$. For example, when $5.0 \leq x_1 \leq 10.0$ and $5.0 \leq x_2 \leq 10.0$, the choice result label C is the choice C1; when $0.0 \leq x_1 < 5.0$ and $5.0 \leq x_2 \leq 10.0$, the choice result label C is the choice C2; when $0.0 \leq x_1 < 5.0$ and $0.0 \leq x_2 < 5.0$, the choice result label C is the choice C3; and when $5.0 \leq x_1 \leq 10.0$ and $0.0 \leq x_2 < 5.0$, the choice result label C is the choice C4.

In the application example, the utility function V was specified on the basis of the explanatory variables $x_1$ and $x_2$ and the choice result label C (C1 to C4). The data used in the experiment was generated by random numbers, and the pieces number of training data of the training data set 21a was 10,000 and the number of pieces of test data was 1000.

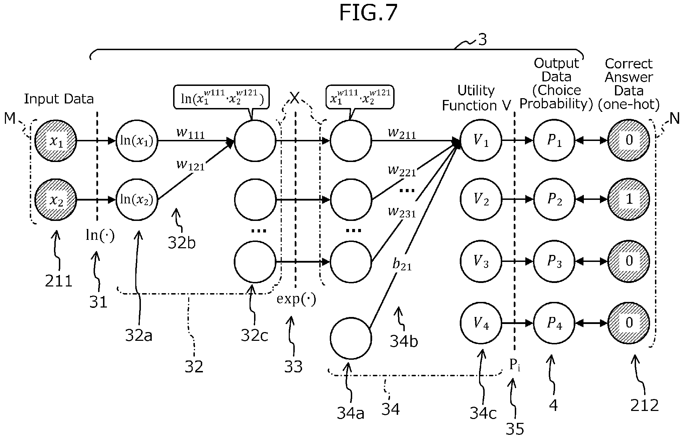

FIG. 7 is a diagram illustrating the NN model 3 according to the application example of the one embodiment. The application example set the number X of intermediate nodes to ten. The input data 211 is the explanatory variables $x_1$ and $x_2$, and the number N of choice probabilities $P_i$ (the number of pieces of the correct answer data 212) included in the output data 4 is four corresponding to the alternatives for the choices C1 to C4.

The first fully-connected layer 32 was set to have no bias b, and the second fully-connected layer 34 was set to have a bias b. In addition, an optimizer was Adam, the parameter of a weight decay was 0.01, and the loss function L was the cross-entropy loss. In the application example, the machine learning process was stopped at the epoch number 100 when a satisfactory convergence of the learning (training) was observed. In the application example, the result of the fine tuning by the adjusting unit 25 was regarded as the final NN model 3.

As the result of estimating (specifying) the NN model 3 on the experiment numeral data, the utility functions $V_1$ to $V_4$ indicated by the following equations (21) to (24) were obtained.

$$V_1 = +0.2305 x_1{}^2 x_2 - 0.1142 x_2{}^2 - 1.051 x_1{}^2 - 0.8550 x_2 - 0.6885 \qquad (21)$$

$$V_2 = -0.1070 x_1{}^2 x_2 + 0.4320 x_2{}^2 - 0.02816 x_1{}^2 - 0.1921 x_2 - 0.8550 \qquad (22)$$

$$V_3 = -0.1973 x_1{}^2 x_2 - 0.07701 x_2{}^2 + 0.4128 x_1{}^2 + 1.557 x_2 + 3.094 \qquad (23)$$

$$V_4 = -0.1023 x_1{}^2 x_2 - 0.1590 x_2{}^2 + 0.5902 x_1{}^2 - 0.4842 x_2 - 1.551 \qquad (24)$$

As the above, the numeral experiment of the application example successfully estimated the complex and interpretable utility functions V from the data. The hit rate of the choice result from the test data was 99.7%, which means sufficient accuracy.

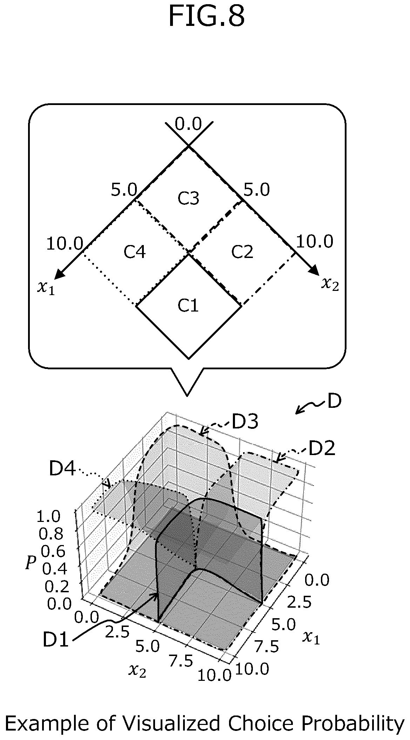

FIG. 8 is a diagram illustrating an example of visualized choice probabilities P. FIG. 8 illustrates a graph D that expresses the utility functions $V_1$ to $V_4$ represented by the above equations (21) to (24) in a three-dimensional space. In FIG. 8, the solid-line graph indicated by the reference sign D1 indicates a choice probability $P_1$ corresponding to the choice C1, and the one-dot-dashed-line graph indicated by the reference sign D2 indicates a choice probability $P_2$ corresponding to the choice C2. In addition, the dashed-line graph indicated by the reference sign D3 indicates a choice probability $P_3$ corresponding to the choice C3, and the dot-line graph indicated by the reference sign D4 indicates a choice probability $P_4$ corresponding to the choice C4.

For example, the output unit 26 may output, as the utility function 30, one or the both of the mathematical equations (21) to (24) and the graph D illustrated in FIG. 8. This can present the highly interpretable utility function 30 ($V_i$) to the analyst.

Example of Operation:

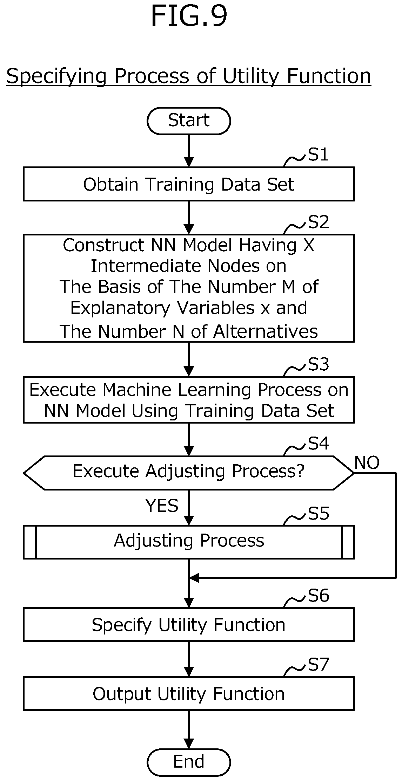

Next, description will now be made in relation to an example of operation performed in the server 2 configured as the above with reference to FIGs. 9-11.

Specifying Process of Utility Function:

FIG. 9 is a flow chart illustrating an example of operation of a specifying process of the utility function 30 in the server 2 of the one embodiment.

As illustrated in FIG. 9, the obtaining unit 22 obtains the training data set 21a (Step S1).

The NN constructing unit 23 constructs the NN model 3 having X intermediate nodes on the basis of the number M of explanatory variables x and the number N of alternatives i in each piece of training data included in training data set 21a (Step S2: see FIG. 3).

The training unit 24 executes the machine-learning process of the NN model 3 using the training data set 21a (Step S3).

The controller 20 determines whether or not to execute the adjusting process (Step S4). Whether or not to execute the adjusting process may be determined based on, for example, the presence or absence of an instruction by the user such as the analyst, or whether or not the weights w of the first fully-connected layer 32 are integers. If the controller 20 determines to execute the adjusting process (YES in Step S4), the process proceeds to Step S5 in which the adjusting process by the adjusting unit 25 is executed, and then the process proceeds to Step S6. If the controller 20 determines not to execute the adjusting process (NO in Step S4), the process proceeds to Step S6.

In Step S6, the output unit 26 specifies the utility function 30. For example, the output unit 26 may generate a mathematical equation representing the utility function 30 on the basis of the parameters of the NN model 3 and the configuration of the NN model 3.

The output unit 26 outputs the utility function 30 (Step S7), and the process ends.

Adjusting Process:

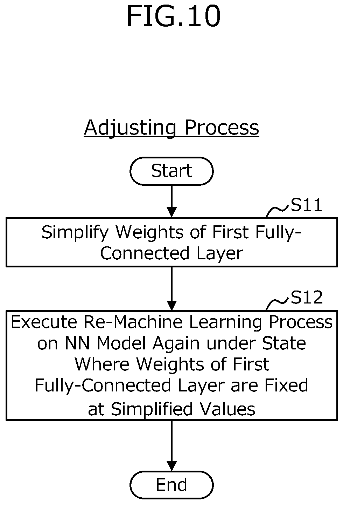

FIG. 10 is a flow chart illustrating an example of operation of the adjusting process in the server 2 of the one embodiment. The process illustrated in FIG. 10 is an example of the adjusting process performed in Step S5 of FIG. 9.

As illustrated in FIG. 10, the adjusting unit 25 simplifies the weights w of the first fully-connected layer 32 in the NN model 3 by, for example, rounding off (Step S11).

The adjusting unit 25 executes a re-machine learning process (fine tuning) on the NN model 3 using, for example, the training data set 21a under a state where the simplified weights w of the first fully-connected layer 32 are fixed (Step S12), and the process ends. As a result, the parameters of the NN model 3 include the simplified weights w of the first fully-connected layer 32 and the weights w and the biases b of the second fully-connected layer 34 updated by the fine tuning.

Inferring Process:

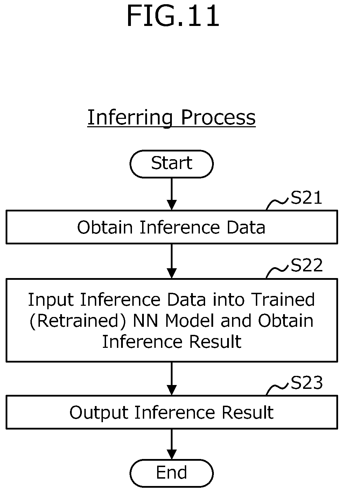

FIG. 11 is a flow chart illustrating an example of operation of the inferring process in the server 2 of the one embodiment. When the controller 20 executes an inferring process using the trained (re-trained) NN model 3, the process illustrated in FIG. 11 may be executed.

The controller 20 obtains inference data (Step S21). Here, the number x of explanatory variables included in the inference data matches the number M of nodes 32a of the first fully-connected layer 32 of the trained (re-trained) NN model 3. The number of alternatives matches the number N of nodes 34c of the second fully-connected layer 34 of the trained (re-trained) NN model 3.

The controller 20 inputs the inference data into the trained (re-trained) NN model 3, and obtains, as an inference result, the output data 4 obtained from the NN model 3 (Step S22).

The output unit 26 outputs the inference result (Step S23), and the process ends.

Miscellaneous:

The technique according to the one embodiment described above can be implemented by changing or modifying as follows.

For example, the functional blocks 22 to 26 included in the server 2 illustrated in FIG. 2 may be merged in any combination and may be divided.

Further, for example, the server 2 illustrated in FIG. 2 may have a configuration in which multiple apparatuses cooperate with each other via a network to embody the respective process functions. As an example, the controller 20 (obtaining unit 22, NN constructing unit 23, training unit 24, adjusting unit 25 and output unit 26) may be implemented by an application server or a web server, and the memory unit 21 may be implemented by a DB (Database) server. In this case, the processing function as the server 2 may be embodied by the web server, the application server, and the DB server cooperating with one another via a network.

The one embodiment assumes that the first fully-connected layer 32 of the NN model 3 does not include the bias b, but the first fully-connected layer 32 is not limited to this. Alternatively, the first fully-connected layer 32 may further include a node 32a for a bias b and edges 32b that connects respective node 32c to the node 32a for the bias b. Like the weights w of the second fully-connected layer 34, the bias b provided to the edge 32b of the first fully-connected layer 32 is the coefficient of the explanatory variable x in the utility function V. This means that the bias b of the first fully-connected layer 32 can be expressed by the weight w of the second fully-connected layer 34. Therefore, in the one embodiment, the bias b of the first fully-connected layer 32 is omitted.

Further, the optimizer, the parameter of the regularization term, and the loss-function L used in the training of the NN model 3 are not limited to the example described above, and various methods and values may be used.

In the one embodiment, the base of the logarithmic function in the logarithmic function unit 31 and the base of the exponential function in the exponential function unit 33 are both exemplified by e, but may alternatively be values other than e as far as the base of these functions are correlated (e.g., match) to each other.

[Reference Signs List]

1 computer
2 server
20 control unit
21 memory unit
21a training data set
211 input data
212 correct answer data
22 obtaining unit
23 NN constructing unit
24 training unit
25 adjusting unit
26 output unit
3 NN model
30 utility function
31 logarithmic function unit
32 first fully-connected layer
32a, 32c, 34a, 34c node
32b, 34b edge
33 exponential function unit
34 second fully-connected function unit
4 output data

**Claims**

1. A computer-implemented method for machine learning, the method comprising:

   training a neural network (3) including parameters, at least some of the parameters having a structure corresponding to an order and a coefficient of an explanatory variable of a utility function (30) of a discrete choice model, using training data including a value of the explanatory variable and a choice result; and
   specifying the utility function (30) in the neural network (3) after being subjected to the training.

2. The computer-implemented method according to claim 1, wherein
   the training comprises configuring the neural network (3) such that the parameters of the neural network (3) correspond to the order, the coefficient, and a constant term of the explanatory variable.

3. The computer-implemented method according to claim 1 or 2 , wherein
   the training comprises configuring the neural network (3), the neural network (3) comprising a logarithmic function (31) that converts the explanatory variable into a logarithm, a first fully-connected layer (32) that inputs therein an output from the logarithmic function (31), an exponential function (33) that converts an output from the first fully-connected layer (32) into an exponent, a second fully-connected layer (34) that inputs therein an output from the exponential function (33), and a function (35) that calculates a choice probability from an output from the second fully-connected layer (34).

4. The computer-implemented method according to any one of claims 1-3, further comprising:

   rounding a first parameter corresponding to the order of the explanatory variable included in the specified utility function (30); and
   adjusting a second parameter corresponding to the coefficient of the explanatory variable while the first parameter after being subjected to the rounding is fixed.

5. The computer-implemented method according to any one of claims 1-4, further comprising:
   outputting the specified utility function (30) in an interpretable format.

6. A machine-learning program for causing a computer to execute a process comprising:

   training a neural network (3) including parameters, at least some of the parameters having a structure corresponding to an order and a coefficient of an explanatory variable of a utility function (30) of a discrete choice model, using training data including a value of the explanatory variable and a choice result; and
   specifying the utility function (30) in the neural network (3) after being subjected to the training.

7. The machine-learning program according to claim 6, wherein
   the training comprises configuring the neural network (3) such that the parameters of the neural network (3) correspond to the order, the coefficient, and a constant term of the explanatory variable.

8. The machine-learning program according to claim 6 or 7, wherein
   the training comprises configuring the neural network (3), the neural network (3) comprising a logarithmic function (31) that converts the explanatory variable into a logarithm, a first fully-connected layer (32) that inputs therein an output from the logarithmic function (31), an exponential function (33) that converts an output from the first fully-connected layer (32) into an exponent, a second fully-connected layer (34) that inputs therein an output from the exponential function (33), and a function (35) that calculates a choice probability from an output from the second fully-connected layer (34).

9. The machine-learning program according to any one of claims 6-8, the process further comprising:

   rounding a first parameter corresponding to the order of the explanatory variable included in the specified utility function (30); and
   adjusting a second parameter corresponding to the coefficient of the explanatory variable while the first parameter after being subjected to the rounding is fixed.

10. The machine-learning program according to any one of claims 6-9, the process further comprising:
    outputting the specified utility function (30) in an interpretable format.

FIG.1

# FIG.2

Server ~2

Memory Unit ~21

Obtaining Unit ~22

NN Constructing Unit ~23

Training Unit ~24

Adjusting Unit ~25

Output Unit ~26

Training Data Set ~21a

NN Model ~3

Utility Function ~30

20:Controller

EP 4 700 654 A1

FIG.3

Input Data

$\ln(x_1^{w111} \cdot x_2^{w121} \cdot x_3^{w131})$  A2

$x_1^{w111} \cdot x_2^{w121} \cdot x_3^{w131}$  A3

A4

"×", "/"  A1

"+", "−"

Utility Function V

Output Data (Choice Probability)

Correct Answer Data (one-hot)

$P_i = \dfrac{\exp(V_i)}{\Sigma_{k=1}^{N} \exp(V_k)}$  A6

$V_1 = w_{211}\, x_1^{w112}\, x_2^{w121}\, x_3^{w131}$
$+ w_{221}\, x_1^{w112}\, x_2^{w122}\, x_3^{w132}$
$+ w_{231}\, x_1^{w113}\, x_2^{w123}\, x_3^{w133}$
$+ b_{21}$  A5

(Cross-Entropy Loss)
$L = -\Sigma_{k=1}^{N} y_k\, log(p_k)$  A7

# FIG.4

$\sim 100$

$x_1$    $w_{111}$    $w_{112}$

$w_{121}$

$x_2$    $w_{122}$

$b_{11}$    $b_{12}$

$V_1$

$V_2$

σ （Activation Function)

120

110

# FIG.5

# FIG.6

# FIG.7

# FIG.8

Example of Visualized Choice Probability

# FIG.9

## Specifying Process of Utility Function

```
           ( Start )
               │
               ▼              ⌒S1
  ┌─────────────────────────────┐
  │    Obtain Training Data Set   │
  └─────────────────────────────┘
               │
               ▼              ⌒S2
  ┌─────────────────────────────┐
  │  Construct NN Model Having X  │
  │      Intermediate Nodes on    │
  │   The Basis of The Number M of│
  │    Explanatory Variables x and│
  │  The Number N of Alternatives │
  └─────────────────────────────┘
               │
               ▼              ⌒S3
  ┌─────────────────────────────┐
  │ Execute Machine Learning      │
  │ Process on NN Model Using     │
  │ Training Data Set             │
  └─────────────────────────────┘
               │
               ▼              ⌒S4
  ◁─────────────────────────────▷ NO
     Execute Adjusting Process?      │
               │                     │
            YES│              ⌒S5    │
  ┌─────────────────────────────┐   │
  │      Adjusting Process        │   │
  └─────────────────────────────┘   │
               │◄──────────────────┘
               ▼              ⌒S6
  ┌─────────────────────────────┐
  │     Specify Utility Function  │
  └─────────────────────────────┘
               │
               ▼              ⌒S7
  ┌─────────────────────────────┐
  │     Output Utility Function   │
  └─────────────────────────────┘
               │
               ▼
            ( End )
```

# FIG.10

## Adjusting Process

Start

S11

Simplify Weights of First Fully-Connected Layer

S12

Execute Re-Machine Learning Process on NN Model Again under State Where Weights of First Fully-Connected Layer are Fixed at Simplified Values

End

# FIG.11

## Inferring Process

Start

Obtain Inference Data ~S21

Input Inference Data into Trained (Retrained) NN Model and Obtain Inference Result ~S22

Output Inference Result ~S23

End

# EP 4 700 654 A1

Europäisches
Patentamt

European
Patent Office

Office européen
des brevets

## EUROPEAN SEARCH REPORT

**Application Number**

EP 25 19 0354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NISHI, T ET AL.: "Discrete-Choice Model with Generalized Additive Utility Network", ARXIV.ORG:2309.16970V1, 29 September 2023 (2023-09-29), XP091626727, * Sections 1, 3.1, 4.1, 4.2, 5.1-5.3 * | 1-10 | INV. G06N3/047 G06N3/048 G06N3/09 |
| X | DELLEN, B et al.: "Function and Pattern Extrapolation with Product-Unit Networks" In: "Computational Science - ICCS 2019. Lecture Notes in Computer Science", 8 June 2019 (2019-06-08), Springer, Cham, XP047660418, ISBN: 978-3-030-22740-1 vol. 11537, pages 174-188, DOI: 10.1007/978-3-030-22741-8_13, * abstract; figure 1 * * Section 2 * | 1-10 | |

-----

-----

**TECHNICAL FIELDS SEARCHED (IPC)**

G06N

The present search report has been drawn up for all claims

| Place of search | Date of completion of the search | Examiner |
|---|---|---|
| The Hague | 16 January 2026 | Millet, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023176898 A